(19)

Europäisches
Patentamt
European
Patent Office
Office européen
des brevets

(11)  **EP 2 668 995 B1**

(12)  **EUROPEAN PATENT SPECIFICATION**

(45) Date of publication and mention
of the grant of the patent:
**29.04.2020  Bulletin 2020/18**

(51) Int Cl.:
**B01D 53/22** *(2006.01)*     **B01D 67/00** *(2006.01)*
**B01D 69/14** *(2006.01)*

(21) Application number: **12170372.2**

(22) Date of filing: **31.05.2012**

(54) **Method for preparing hydrophobic fluorinated mixed matrix membranes, said membranes, and separation methods using said membranes**

Verfahren zur Herstellung von hydrophoben fluorierten Mixed-Matrix-Membranen, Membranen und Trennverfahren

Procédé de préparation de membranes hydrophobes fluorées à matrice mixtes, membranes et méthodes de séparation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.12.2013  Bulletin 2013/49**

(73) Proprietor: **Universita' Della Calabria**
**87036 Rende (CS) (IT)**

(72) Inventors:
• **Golemme, Giovanni**
**87100 Cosenza (IT)**
• **Buonomenna, Maria Giovanna**
**84128 Salerno (IT)**
• **Bruno, Andrea**
**89025 Rosarno (IT)**
• **Manes, Raffaella**
**87010 Lungro CS (IT)**

(74) Representative: **Perrotta, Aldo**
**Ing. Aldo Perrotta**
**Corso Umberto 81**
**88068 Soverato (IT)**

(56) References cited:
**US-B1- 6 508 860     US-B2- 7 109 140**

• **GOLEMME G ET AL: "Preparation and properties of superglassy polymers - zeolite mixed matrix membranes", DESALINATION, ELSEVIER, AMSTERDAM, NL, vol. 200, no. 1-3, 20 November 2006 (2006-11-20), pages 440-442, XP028021608, ISSN: 0011-9164, DOI: 10.1016/J.DESAL.2006.03.396 [retrieved on 2006-11-20]**
• **TRICOLI V ET AL: "Zeolite-Nafion composites as ion conducting membrane materials", ELECTROCHIMICA ACTA, ELSEVIER SCIENCE PUBLISHERS, BARKING, GB, vol. 48, no. 18, 1 August 2003 (2003-08-01), pages 2625-2633, XP004435009, ISSN: 0013-4686, DOI: 10.1016/S0013-4686(03)00306-2**

**Description**

SUMMARY OF THE INVENTION

The present invention relates to a method for the preparation of a type of hydrophobic composite membranes comprising a) a hydrophobic perfluorinated or highly fluorinated polymer b) a microporous filler; to said membranes; to the use of said membranes in separation methods. In particular this invention relates to a method for preparing composite membranes comprising a hydrophobic perfluorinated or highly fluorinated polymer, and microporous fillers characterized by the presence of hydroxyl groups on their outer surface before modification, comprising the steps of: preliminary modification of non fluorophilic microporous fillers with a fluorophilic surface modifying agent; mixing the porous filler with a solution of the polymer; forming a homogeneous distribution of the porous filler in the solution of the polymer; casting of the membrane; removing solvent from the composite membrane.

Mixed matrix membranes in which the continuous phase is comprised of a hydrophobic perfluorinated or highly fluorinated polymer, and the dispersed phase is comprised of microporous particles which, in origin, contain on their outer surface -OH groups, are obtained through a preliminary surface modification treatment of the porous particles with the stoichiometric amount or a modest excess of a fluorophilic surface modifying agent. The fluorophilic surface modifying agent is a bi- or trifunctional organic compound of silicon, such that: (a) at least one substituent of silicon must be compatible with the polymer; (b) two or three displaceable radicals of silicon are able to react with the external surface of the porous particles thus enabling silicon to graft on it with two or three bonds, in order to impart hydrolytical stability to the graft.

The process for the preparation of such mixed membranes involves the preliminary treatment of non fluorophilic porous particles with a bi- or tri-functional fluorophilic surface modification agent, the uniform dispersion of the fluorophilic porous particles in a solution of the fluoropolymer, and the formation of the structure of the mixed matrix membranes. The membranes of the present invention can be prepared with porous filler of high aspect ratio, in which such porous particles are oriented with their largest dimensions parallel to the external surface of the membrane. The membranes of the present invention can be porous or dense, and can be applied in the separation of gas and liquid mixtures, in the separation of solutes from a solution, or as catalytic membranes.

The dense mixed matrix membranes for the separation of gas prepared according to the methods of the present invention yield a better combination of permeability and selectivity with respect to membranes made of sole polymer. The membranes of the present invention which contain high aspect ratio porous fillers oriented with their largest dimensions parallel to the external surface of the membrane enable to obtain better permeability and selectivity combinations with respect to analogous membranes containing low aspect ratio filler.

Dense mixed matrix membranes formed by a perfluoropolymer continuous phase and a fluorophilic porous filler dispersed phase, prepared according to the methods disclosed by the present invention, display improved permeability and selectivity combinations for the separation of $CO_2$ from mixtures containing methane.

STATE OF THE ART

Membrane operations (M. Mulder, Basic Principles of Membrane Technology, Kluwer: Dordrecht (NL), 1991) are intrinsically efficient and operationally simple, easy to control, to scale-up, and flexible; therefore, they lend themselves to an effective rationalization of a large variety of industrial processes (J. C. Charpentier, Modern Chemical Engineering in the Framework of Globalization, Sustainibility and Technical Innovation, Ind. Eng. Chem. Res. 46 (2007) 3465). The industrial applications of membrane operations instead of usual separation processes (distillation, absorption, adsorption etc), however, is limited by the poor resistance of traditional polymeric membranes, which are unable to handle organic solvents or aggressive chemicals, especially in demanding high temperature environments. The early polymers used for the preparation of Reverse Osmosis and Gas Separation (GS) membranes (*i.e.* cellulose esters, polysulfone), in fact, can treat moist streams or aqueous solutions, but cannot tolerate organic solvents, high temperatures and aggressive chemicals, and are unfit to operate in the harsh environments typical of the oil refining and the chemical industry.

On the other hand, inorganic membranes, characterized by outstanding performances, are plagued today by such high capital and running costs that their use can only be justified in niche productions with extremely high added value.

For these reasons, one of the most successful strategies for the reduction in the economic and environmental impact of the synthesis and purification of commodities is believed to consist in the introduction of organic-inorganic hybrid membranes which may couple, at a low cost, the excellent performances of inorganic materials with the ease of processing of polymeric membranes (T. S. Chung, L. Y. Jiang, Y. Yi; S. Kulprathipanja, Prog. Polym. Sci., 32 (2007) 483). Mixed matrix membranes comprising a continuous polymeric phase embedding a non continuous phase made of dispersed porous particles are potentially able to offer better separation properties for gas and liquid mixtures with respect to membranes just made of polymer. The reported invention is in the frame of this approach.

The first attempt to combine zeolites with different organic polymers dates back to 1960, when Barrer and James prepared composite membranes by compression molding (R. M. Barrer, S. D. James, J. Phys. Chem., 54 (1) (1960) 417). A different approach was used by Paul and Kemp: a suspension of zeolites was obtained in a polymer solution in a suitable solvent by stirring, and a film of suspension cast on a flat surface was dried by solvent evaporation and cured to give the membrane (D. R. Paul, D. R. Kemp, J. Polym. Sci. Polym. Symp., 41 (1973) 79-93).

When the surface of the porous material has modest or no affinity with the polymeric material it is difficult to homogeneously disperse the porous particles in the polymeric matrix and/or to obtain a satisfactory adhesion of the two phases, with the consequent formation of voids or defects at the interface which, in turn, allow a non selective transport of the components of the mixture to be separated (T. T. Moore, W. J. Koros, Non-ideal effects in organic-inorganic materials for gas separation membranes, Journal of Molecular Structure 739 (1-3) (2005) 87-98).

One of the methods to eliminate the formation of defects at the polymer-filler interface consists in the functionalization of the porous particles with a solution of a polymer which is different from the continuous matrix, and that is able to form with the porous particles hydrogen bonds, covalent bonds, or ionic bonds (C. Liu, et al., US2009/0149313 A1).

A second method for the elimination of defects is the use of coupling agents that, after binding covalently on the surface of the particles, introduce on the outer surface of the particle groups able to form hydrogen bonds, covalent bonds or ionic bonds with the polymeric material. Typically, such coupling agents are silanes containing two different functionalities, with generic formula $Si(XYR_1R_2)$ in which X is an exchangeable radical, Y is a radical able to link the polymer by means of ionic, covalent or hydrogen bonds, and the radicals $R_1$ and $R_2$ can be independently exchangeable or non exchangeable radicals of type X, of type Y, or of a different type, *e.g.* non reactive. The nature of the substituent X (generally -OR' groups, such as $-OCH_3$, $-OCH_2CH_3$) is such that they can be exchanged to form covalent bonds between the silicon atom of the modification agent and the oxygen of the -OH groups present on the surface of the particles to disperse. In this way one can derivatize the surface of the particles with $-Si(YR_1R_2)$ groups, in which Y can interact with the polymer to form hydrogen bonds, covalent bonds or ionic bonds with the polymeric material. (S. S. Kulkarni, et al., US Pat. 6508860, 2003; E. Marand, et al., US Pat. 7109140, 2006).

One further method applied to eliminate the formation of defects in mixed matrix membranes is the use of modifying agents that, binding at the surface of the particles, introduce on the outer surface of the filler groups with affinity to the polymeric material, however not binding to it by hydrogen bonds, covalent bonds or ionic bonds. This latter method has been applied by Li and co-workers to prepare mixed matrix membranes containing ZSM-5, that had been previously functionalized with alkyl groups, in a silicon rubber matrix (X. Zhan, et al., Chinese J. Polym. Sci., 28 (4) 625-35 (2010)). Typically, the coupling agents used in this latter method are silanes of formula $RSiX_3$. The nature of the substituent X (usually Cl atoms or -OR' groups, such as $-OCH_3$, $-OCH_2CH_3$) is such that they can be exchanged to form covalent bonds between the silicon of the modifying agent and the oxygen of the -OH groups which are present on the surface of the particles to be dispersed in the matrix. R instead is chemically affine to the polymer. In such a way the surface of the porous particles can be derivatized with $=SiR$ groups, that enable the polymer to adhere to the particles thanks to simple dipole-dipole interactions or apolar dispersion forces, with no formation of ionic, covalent or hydrogen bonds.

Compounds of general formula $R_3SiX$ can only form a single bond with the surface of the particle: this circumstance avoids polymerization through self-condensation, and enables the exclusive formation of one single layer of modifier on the surface. The drawback of this approach stems from the vulnerability to hydrolysis of the single Si-O-Si bond of the graft, especially in presence of moisture, at higher temperatures and in basic environments (R. K. Iler, The Chemistry of Silica: Solubility, Polymerization, Colloid and Surface Properties and Biochemistry, Wiley: Chichester, 1979; F. A. Cotton, G. Wilkinson, Advanced Inorganic Chemistry, 4th ed., Wiley: New York, 1980, p. 387), even at pH values as low as 8.3 (C. M. Dekeyser, C. C. Buron, S. R. Derclaye, A. M. Jonas, J. Marchand-Brynaert, P. G. Rouxhet, J. Coll. Interf. Sci., 378 (2012) 77-82).

Compounds of general formula $X_2SiR_2$ and $X_3SiR$ can form two or three bonds with the surface of the particle, or else can link with one or two bond to the surface, and use the second or third reactive group X to form covalent bonds with a second or a third modification molecule via Si-O-Si linkages. The presence of anchoring to the surface together with partial in-plane cross-linkage among the modification agents has the advantage to impart to the graft a higher thermal and hydrolytic stability (S. R. Cohen, R. Naaman, J. Sagiv; J. Phys. Chem., 90 (1986) 3054; M. Calistri Yeh, E. J. Kramer, R. Sharma, W. Zhao, M. H. Rafailovich, J. Sokolov, J. D. Brock, Langmuir, 12 (1996) 2747; U. Srinivasan, M. R. Houston, R. T. Howe, R. Maboudian, J. Microelectromech. Syst., 7 (1998) 252; R. W. Wang, G. Baran, S. L. Wunder, Langmuir, 16 (2000) 6298; R. W. Wang, S. L. Wunder, J. Phys. Chem. B, 105 (2001) 173; D. Devaprakasam, S. Sampath, S. K. Biswas, Langmuir, 20 (2004) 1329) which in turn makes the graft more resistant and the resultant mixed matrix membranes more fit for harsh and demanding applications.

The use of a stoichiometric amount of surface modifier to completely react with the -OH groups on the outer surface of the microporous particles is never reported in the patents or in the open literature, nor it is possible in most cases to derive it from the experimental results: in fact, the specific outer surface area of the porous particles is never reported, and usually the average size of the particles and the amount of the modification agent is not known (see S. S. Kulkarni, et al., US Pat. 6508860, 2003).

In a scientific paper (G Clarizia, et al., Micropor. Mesopor. Mater., 115 (2008) 67-74) in which mixed matrix membranes are prepared, Na-A zeolite crystals are modified with a bi-functional molecule, and it is possible to evaluate with a reasonable approximation that the excess of reagent which is used is large, i.e. about 1000 times the stoichiometric amount. In this paper, in fact, the amounts of Na-A zeolite (2.5 g) and of 3-aminopropylmethyldiethoxysilane (APMDES, 20 ml), together with the size of the cubic crystals (range 1-4 $\mu$m) are reported. By assuming conservative values (crystal size 1 $\mu$m, 4 - OH groups/nm$^2$ on their outer surface, zeolite density 1.5 g/cm$^3$) it turns out that the molar ratio between APMDES and outer -OH groups is 1330. If instead a more realistic average size of the crystals is assumed (2 $\mu$m), the molar APMDES / -OH ratio is 2660. Since one single APMDES molecule can react with two -OH groups, the stoichiometric excess in the cited paper (G Clarizia, et al., Micropor. Mesopor. Mater., 115 (2008) 67-74) is higher than 665, and reasonably close to 1330.

The drawback of this approach is that self-condensation of the modifying agent can take place when a large excess of modifying agent is used. Self-condensation, in fact, may produce a thick deposit of organically functionalized silica on the surface of the porous particles [J. B. Brzoska, et al., Langmuir, 10 (1994) 4367; R. Banga et al., Langmuir, 11 (1995) 4393; K. Wu, et al., Langmuir, 21 (2005) 11795] which, in turn, can hinder or block the transport of matter at the interface with the polymer.

It has been demonstrated theoretically that the increase of the aspect ratio of the porous fillers dispersed in mixed matrix membranes is able to increase the separation selectivity of the membranes, provided that the high aspect ratio fillers are oriented in the mixed matrix membrane with their largest dimensions parallel to the membrane surface, i.e. normal to the direction of the flux (E.L. Cussler, Membranes containing selective flakes, J. Membr. Sci., 52 (1990) 275-288). For this reason, the preparation of mixed matrix membranes in which high aspect ratio porous fillers are oriented with their largest dimensions parallel to the membrane surface offer the opportunity to increase further the separation selectivity with respect to analogous mixed matrix membranes, containing the same amount of low aspect ratio fillers.

For what concerns the molecular sieve SAPO-34 (CHA) the usual shape of the crystals is cubic, with aspect ratio in the range 1-2. The synthesis of high aspect ratio SAPO-34 requires the addition of crystal growth inhibitors in the starting mixture, such as methylene blue (S. R. Venna, M. A. Carreon, J. Phys. Chem. B, Vol. 112 (2008) 16261-16265).

In the open literature two only papers describe mixed matrix membranes made of the hydrophobic perfluoropolymers Teflon AF 2400, Teflon AF 1600 (copolymers of tetrafluoroethylene and perfluoro-2,2-dimethyl-1,3-dioxole) and Hyflon AD 60X (copolymer of tetrafluoroethylene and perfluoro-4-methoxy-1,3-dioxole) containing dispersed porous fillers particles (silicalite-1, MFI) [G. Golemme et al., Desalination, 200 (2006) 440; G. Golemme, et al., Glassy perfluorolymer - zeolite hybrid membranes for gas separations; in B. D. Freeman, and Yu. P. Yampol'skii, Eds.; Membrane gas separation, Wiley, (2010)], in which the properties of the membranes have been described, but the preparation of the membranes has not been disclosed.

## APPLICATIONS

The invention regards: (a) a method as defined in the claims for the preparation of mixed matrix membranes made of hydrophobic perfluorinated or highly fluorinated polymers, which contain microporous fillers, in which no ionic, covalent or hydrogen bonds is linking the polymer matrix to the porous filler. The microporous filler has to be treated with a surface modifying agent. Typically, the modifying agents are bi- and tri-functional silanes of formula $X_2SiR_fR$ or $X_3SiR_f$. The nature of the substituent X (usually halogen or hydrogen atoms; -OR' groups, such as $-OCH_3$, $-OCH_2CH_3$; esteric groups, such as $CH_3C(O)O-$; -NR'R" groups; $-OSO_2R$ groups) is such that it can be exchanged to form covalent bonds between the silicon of the modifying agent and the oxygen of the -OH groups which are present on the surface of the particles to be dispersed in the matrix, Rf is a hydrophobic fluorinated radical, and R can be Rf, a different hydrophobic fluorinated radical or any radical containing only C and H atoms; (b) said membranes; (c) the processes of separation of components of fluid mixtures by i) contacting the fluid mixture on one side of said membranes to cause the components to selectively permeate the membrane and ii) removing from the opposite side of the membrane a permeate composition enriched in concentration of at least one component of the mixture.

The novel membranes as defined in the claims prepared by the method disclosed by the present invention are suitable to several industrial applications: the separation of gas mixtures; the separation of liquid mixtures; the drying of gaseous streams; the separation olefins from mixtures with alkanes (e.g. ethane/ethylene; propane/propylene, etc.); the adjustment of the ratio of the components in synthesis gas; the recovery of volatile organic compounds from gas streams. As evident to those skilled in the art, another application of the said membranes which contain catalytic porous materials produced with the method disclosed by the present invention it is to carry out catalytic reactions.

In one embodiment of the invention, the membranes produced with the method disclosed can be used for the purification of natural gas from the impurities it contains ($CO_2$, $N_2$, $H_2S$, $H_2O$).

TECHNICAL PROBLEM

Hydrophobic perfluorinated or highly fluorinated polymers do not adhere to almost any material. If, in addition to that, said polymers are glassy, the rigidity of the matrix makes the adhesion of a dispersed phase even more difficult. Yet another difficulty in the dispersion of porous fillers is the chemical inertness of hydrophobic perfluorinated polymers, which does not allow the formation of covalent, ionic or hydrogen bonds with the porous fillers.

Therefore, the preparation of defect-free mixed matrix membranes based on such polymers and containing microporous fillers cannot rely on the formation of bonds between the matrix and the fillers.

The polymers currently used in the preparation of membranes for the purification of natural gas from $CO_2$ and $H_2S$, such as polyimides and cellulose esters, are plasticized by high partial pressures of $CO_2$ and by traces of higher hydrocarbons, with consequent loss of selectivity. Hydrophobic perfluorinated polymers display lower permeability and selectivity combinations with respect to the above polymers, however, since they are much more resistant to plasticization (R. W. Baker, K. Lokhandwala, Ind. Eng. Chem. Res., 47 (2008) 2109) and thanks to their chemical inertness, membranes made of hydrophobic perfluorinated polymers perform better in demanding applications (e.g. with high partial pressures of $CO_2$) in which conventional polymeric membranes swell or plasticize.

The compatibilization of polymer and filler via chemical grafting of the outer surface of the porous fillers with mono-functional modification agents of general formula $R_3SiX$, avoids polymerization through self-condensation and the formation of thick and bulky layers of silica, but it makes the modified filler more vulnerable to hydrolysis of the single Si-O-Si bond of the graft.

Compounds of general formula $X_2SiR_fR$ or $X_3SiR_f$ form stronger and more resistant bonds with the surface of the porous filler, but the modifying agent can self-condense when a large excess of reagent is used, which may produce a thick deposit of organically functionalized silica on the surface of the porous particles.

Yet another problem for the functionalization of microporous fillers that have to be dispersed in a hydrophobic perfluorinated or highly fluorinated polymer is the high cost of the fluorinated modification agents.

SOLUTIONS OF THE TECHNICAL PROBLEM

The method disclosed by the present invention and defined in the claims for the preparation of robust mixed matrix membranes comprised of a microporous filler dispersed in hydrophobic perfluorinated or highly fluorinated polymer matrix involves the use of a bi- or tri-functional surface modifying agent, that forms stronger and more resistant bonds with the surface of the porous filler. At the same time the method disclosed by the present invention allows a strict control over the amount of bi- or tri-functional surface modifying agent, in order to prevent the self-condensation of the modifying agent and the formation of deposits of organically functionalized silica on the surface of the microporous particles. In turn, the method disclosed by the present invention reduces to the essential the need of the expensive surface modifying agent, and therefore it is effective in reducing the costs of preparation of the resulting mixed matrix membranes.

The microporous filler, characterized by the presence of -OH groups on its outer surface, has to be treated with a fluorophilic surface modifying agent. Typically, the fluorophilic modification agents are bi- and tri-functional silanes of formula $X_2SiR_fR$ or $X_3SiR_f$. The nature of the substituent X (usually halogen or hydrogen atoms; -OR' groups, such as $-OCH_3$, $-OCH_2CH_3$; esteric groups, such as $CH_3C(O)O-$; -NR'R" groups; $-OSO_2R$ groups) is such that it can be exchanged to form covalent bonds between the silicon of the modifying agent and the oxygen of the -OH groups which are present on the surface of the particles to be dispersed in the matrix, $R_f$ is a hydrophobic fluorinated radical, and R can be $R_f$, a different hydrophobic fluorinated radical or any radical containing only C and H atoms. The modification reaction is carried out by employing a modest excess of reagent with respect to the stoichiometric amount, in order to favour the formation of a single layer of modification agent on the surface of the porous particles. The stoichiometric amount of modification agent needed, in moles, is equal to one half or one third of the number of moles of -OH groups on the outer surface of the porous particles in case of bi-functional $X_2SiR_fR$ or tri-functional $X_3SiR_f$ modification agents, respectively.

The number of moles of -OH groups on the outer surface of the porous particles per unit mass ($n(OH)/\Delta m$) was evaluated through i) the density of the porous material before and after calcination, ii) the experimental measurement of the specific outer surface of the porous particles, and iii) the specific amount of -OH groups per unit outer surface, as described below.

The density of the porous material after calcination is assumed to be equal to the framework density of the molecular sieve. The latter is readily calculated from the elemental composition of the material and from the geometric features of the unit cell, available from the International Zeolite Association database, www.iza-online.org. The density of molecular sieve particles which still contain the template molecules used to synthesize them can be evaluated by assuming that the empty space in the pores is filled with matter (organics, water) with density of around 1 $g/cm^3$. In this way, the framework density of SAPO-34 turns out to be 1.53 $g/cm^3$, whereas the density of as made, impermeable SAPO-34, not calcined yet to free its pores, turns out to be around 1.87 $g/cm^3$. When this method is applied to silicalite-1 (MFI), the framework density turns out 1.836 $g/cm^3$, and the density of the as made material 2.038 $g/cm^3$, in very good

agreement with the experimental values of 1.76 and 1.99 g/cm³ reported by Flanigen and co-workers (E. M. Flanigen, J. M. Bennett, R. W. Grose, J. P. Cohen, R. L. Patton, R. M. Kirchner, J. V. Smith, Nature, 271 (1978) 512-516).

$(\Delta S/\Delta m)_{NC}$, the specific outer surface of as made, impermeable porous particles, in m²/g, was measured via $N_2$ soption at 77 K before calcination through the BET method. The specific outer surface of the calcined SAPO-34 $(\Delta S/\Delta m)$ was easily calculated from the measured value of the calcined SAPO-34 $(\Delta S/\Delta m)_{NC}$ through the following equation:

$$\Delta S/\Delta m = (1.87/1.53)\,(\Delta S/\Delta m)_{NC} = 1.22\,(\Delta S/\Delta m)_{NC}.$$

$n(OH)/\Delta S$, the maximum amount of -OH groups per unit outer surface, is determined from the unit cell and the crystallographic parameters of the molecular sieves (International Zeolite Association database, www.iza-online.org). For the cubic morphology of SAPO-34 (CHA) this value is 4.54 -OH groups/nm² ($7.54 \cdot 10^{-6}$ moles/m²) on four faces and 3.70 -OH groups/nm² ($6.15 \cdot 10^{-6}$ moles/m²) on the other two faces. $n(OH)/\Delta m$, the maximum amount of -OH groups of SAPO-34 (in moles/g) can therefore be determined in the following way:

$$n(OH)/\Delta m = [n(OH)/\Delta S]\,(\Delta S/\Delta m)$$

The amount of modification agent to use in the derivatization is determined by multiplying the stoichiometric amount for a factor in the range between 1 and 20.

The outer surface modification of the porous fillers enables their homogeneous dispersion in the perfluorinated or highly fluorinated polymer matrix, and allows a good adhesion between the two phases.

The presence of microporous particles in hydrophobic perfluorinated or highly fluorinated polymers enables the obtaining of better permeability - selectivity combinations, and makes it possible to prepare mixed matrix membranes more resistant to plasticization for the purification and the treatment of natural gas from $CO_2$ and $H_2S$. The availability of more selective and permeable membranes in real operations makes it economically convenient to exploit small capacity natural gas wells, as well as natural gas with high amounts of $CO_2$ (R. W. Baker, K. Lokhandwala, Ind. Eng. Chem. Res., 47 (2008) 2109), and allows to reduce the economic and environmental costs of the treatment of natural gas.

EXAMPLES

Example n. 1.

SAPO-34 crystals were synthesized from aluminium isopropoxide ($Al(OiC_3H_7)_3$, Merck), 85% phosphoric acid in water (Fluka), deionized water (MilliQ, Millipore), Ludox AS-40 (Aldrich, colloidal suspension of 40% $SiO_2$ in water), tetraethylammonium hydroxide (TEAOH, 35% in water, Aldrich), dipropylamine (DPA, Aldrich) and cyclohexylamine ($C_6H_{11}NH_2$, Aldrich). A reaction gel with composition (in oxides) $Al_2O_3$:$P_2O_5$:0.6$SiO_2$:TE-AOH:0.8DPA:0.8$C_6H_{11}NH_2$:52$H_2O$ was prepared in the following way: 8.170 g of aluminium isopropoxide, 4.612 g of 85% phosphoric acid and 12.192 g of deionized water were stirred in a closed polytetrafluoroethylene bottle until a homogeneous solution was obtained; 1.802 g of Ludox AS-40 were added and the mixture was stirred for 3 hours; then 10.098 g of TEAOH 35%, 1.619 g of DPA and 1.587 g of cyclohexylamine were added, and the mixture was vigorously stirred at 50°C for three days.

After this time the mixture was transferred into a 45 ml Teflon lined stainless steel autoclave, introduced into an air oven and heated at 220°C for 24 hours. After cooling, the content of the autoclave was filtered and washed several times with deionized water, and the white powder was dried at 100°C overnight. The powder X-ray diffraction spectrum indicated the presence of the sole zeolitic topology CHA, which identifies SAPO-34. The X-ray photoelectron spectroscopy confirmed the presence of phosphorus, aluminium and silicon. The length of the crystals, with the shape of a parallelepiped, was between 1 and 3 $\mu$m, with average size 2 $\mu$m. The aspect ratio of the crystals was about 2. The SAPO-34 sample was calcined at 500 °C in nitrogen (heating rate 2°C/min) and then in air (2°C/min) to remove the organic matter occluding the pores. The measured specific outer surface of the non calcined SAPO-34 crystals ($N_2$ sorption at 77 K, BET method) was 2.84 m²/g, equivalent to 3.46 m²/g for the calcined SAPO-34. The stoichiometric amount of the trifunctional modifying agent $F(CF_2)_8CH_2CH_2SiCl_3$ (Apollo Scientific) to be used was therefore determined to be $8.7 \cdot 10^{-6}$ moles/g.

0.578 g of calcined SAPO-34 were suspended in 15 ml of dry toluene by ultrasonication for 15 minutes in a dry atmosphere. 30 $\mu$l of $F(CF_2)_8CH_2CH_2SiCl_3$ ($8.3 \cdot 10^{-5}$ moles) were added and the mixture was stirred for 15 minutes. After centrifugation the solution was eliminated, the solid was washed repeatedly with dry toluene to remove the excess of reagent, and the solid was dried at 180°C under vacuum. 43.1 mg of the dried solid and 100,4 mg di Hyflon AD60X (Solvay Solexis; density 1.917 g/cm³, M. L. Macchione et al., Polymer, 48 (2007) 2619) were magnetically stirred in 1.90 g of FC72 (3M) until a viscous homogeneous suspension formed. The polymer-to-SAPO-34 volumetric ratio was 65:35. The suspension was poured in a stainless steel ring onto a leveled glass surface, and the ring was covered with a watch glass to slow down the evaporation rate of the solvent. After three days a white opaque film was detached from the glass, and any residual solvent was removed by heating under vacuum up to 130 °C, heating rate 2°C/hour.

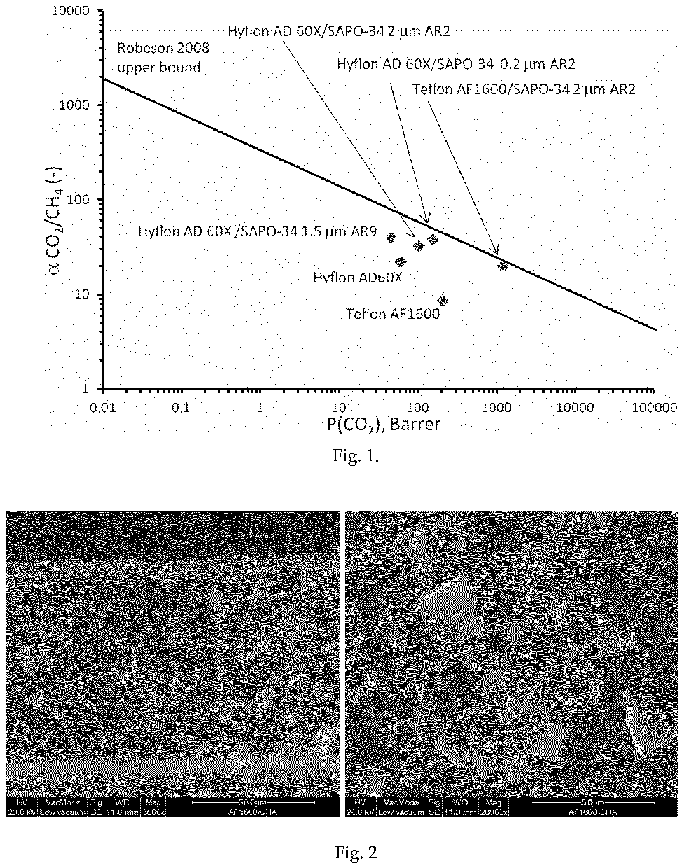

The thickness of the membrane was measured with a micrometer (Carl Mahr) and resulted to be 70 $\mu$m. The pure gas permeability of the membrane was measured at room temperature at the steady state in a volumetric device described in the literature (M. G. Buonomenna, et al., Adv. Funct. Mater., 22 (8) 1759-1767 (2012)) by imposing a pressure gradient of 5 bar, and measuring the volume of gas permeated through the membrane at atmospheric pressure as a function of time. The permeability of the gases tested are reported in Table 1 and in Figure 1.

Comparative Example n. 2.

150.2 mg of Hyflon AD60X (Solvay Solexis) were magnetically stirred in 2.85 g of FC72 (3M) until a viscous homogeneous solution formed. The solution was poured in a stainless steel ring onto a leveled glass surface, and the ring was covered with a watch glass to slow down the evaporation rate of the solvent. After three days a transparent film was detached from the glass, and any residual solvent was removed by heating under vacuum up to 130 °C, heating rate 2°C/hour.

The thickness of the membrane was measured with a micrometer (Carl Mahr) and resulted to be 41 $\mu$m. The pure gas permeability of the membrane was measured as described in example 1. The permeability of the gases tested are reported in Table 1 and in Figure 1.

Example n. 3.

SAPO-34 crystals were synthesized, calcined and treated with $F(CF_2)_8CH_2CH_2SiCl_3$ as described in example 1. 41.9 mg of SAPO-34 and 89.2 mg of Teflon AF1600 (DuPont, density 1.765 g/cm$^3$) were stirred in 1.352 g of Galden HT110 (Solvay Solexis) until a viscous homogeneous suspension formed. The polymer-to-SAPO-34 volumetric ratio was 65:35. The suspension was poured in a stainless steel ring onto a leveled glass surface, and the ring was covered with a watch glass to slow down the evaporation rate of the solvent. After three days a white opaque film was detached from the glass, and any residual solvent was removed by heating under vacuum up to 160 °C, heating rate 2°C/hour.

The thickness of the membrane was measured with a micrometer (Carl Mahr) and resulted to be 37 $\mu$m. The morphology of the membrane is shown in Figure 2. The pure gas permeability of the membrane was measured as described in example 1. The permeability of the gases tested are reported in Table 1 and in Figure 1.

Example n. 4.

SAPO-34 crystals were synthesized from aluminum hydroxide (Al(OH)$_3$, Merck), 85% phosphoric acid in water (Fluka), deionized water (MilliQ, Millipore), tetraethoxysilane (AlfaAesar), tetraethylammonium hydroxide (TEAOH, 35% in water, Aldrich), ethanol 99.8% (Carlo Erba). A reaction gel with composition (in oxides) $Al_2O_3:P_2O_5:0.3SiO_2:2.09TEAOH:43.8H_2O:12.8EtOH$ was prepared in the following way: 72.40 g of aluminum hydroxide, 107.01 g of 85% phosphoric acid and 39.51 g of deionized water were stirred in a closed polytetrafluoroethylene bottle until a homogeneous mixture was obtained. Then 29.01 g of tetraethoxysilane were added and the mixture was vigorously stirred for 8 hours; 407.8 g of TEAOH 35% were added, and the mixture was stirred vigorously for 12 more hours. After addition of 248.1 g of 99.8% ethanol the mixture was kept stirred vigorously for three days. After this time the mixture was transferred into a 1 liter Teflon lined stainless steel autoclave, introduced into an air oven and rotated at 12 rounds per minute at 200°C for 24 hours. After cooling, the content of the autoclave was purified repeatedly by centrifuging and dispersion in deionized water, and finally the solid was dried at 80°C in an air oven overnight. The powder X-ray diffraction spectrum indicated the presence of the sole zeolitic topology CHA, which identified SAPO-34. The X-ray photoelectron spectroscopy confirmed the presence of phosphorus, aluminum and silicon. The length of the crystals, with the shape of a parallelepiped, was between 100 and 300 nm, with average size 200 nm. The aspect ratio of the crystals was about 2.

In order to remove the tetraethylammonium ion without nanocrystal sintering and aggregation, a polymer network was formed into a colloidal SAPO-34 suspension in the following way: in a suspension of 10 g SAPO-34 in 500 ml of deionized water, 50 g of acrylamide (Alfa Aesar), 10 mg of N,N'-methylenebisacrylamide (Aldrich), and 1.3 g of ammonium peroxidisulfate $(NH_4)_2S_2O_8$ (Alfa-Aesar) were dissolved. The suspension was ultrasonicated for 1 hour to disperse the SAPO-34 crystals in the mixture, and then heated at 60°C to form an elastic gel. The gel was dried at 80-120°C for two days to yield a glassy polymeric mass which, in turn, was carbonized first at 500 °C in a nitrogen atmosphere (heating rate 2°C/min), and then at 500°C in air (heating rate 2°C/min).

The measured specific outer surface of the non calcined SAPO-34 crystals (N$_2$ sorption at 77 K, BET method) was 21.1 m$^2$/g, equivalent to 25.7 m$^2$/g for the calcined SAPO-34. The stoichiometric amount of the trifunctional modifying

agent $F(CF_2)_8CH_2CH_2SiCl_3$ to be used was therefore determined to be $6.5 \cdot 10^{-5}$ moles/g.

0.737 g of calcined SAPO-34 were suspended in 20 ml of dry toluene by ultrasonication for 15 min. 300 $\mu$l of $F(CF_2)_8CH_2CH_2SiCl_3$ ($8.4 \cdot 10^{-4}$ moles) were added and the mixture was stirred for 15 minutes. The solution was eliminated, the solid was washed repeatedly with dry toluene to remove the excess of reagent, and the solid was dried at 180°C under vacuum. A suspension containing 2.11 wt% of the dried solid, 4.91 wt% of Hyflon AD60X and 92.98 wt% of FC72 (3M) was magnetically stirred until a viscous homogeneous suspension formed. The polymer-to-SAPO-34 volumetric ratio was 65:35. The suspension was poured in a stainless steel ring onto a leveled glass surface, and the ring was covered with a watch glass to slow down the evaporation rate. After three days a transparent film was detached from the glass, and any residual solvent was removed by heating under vacuum up to 130 °C, heating rate 2°C/hour.

The thickness of the membrane was measured with a micrometer (Carl Mahr) and resulted to be 68 $\mu$m. The pure gas permeability of the membrane was measured as described in example 1. The permeability of the gases tested are reported in Table 1 and in Figure 1.

Example n. 5.

SAPO-34 crystals were synthesized from aluminum isopropoxide ($Al(OiC_3H_7)_3$, Merck), 85% phosphoric acid in water (Fluka), deionized water (MilliQ, Millipore), Ludox AS-40 (Aldrich, colloidal suspension of 40% $SiO_2$ in water), tetraethylammonium hydroxide (TEAOH, 35% in water, Aldrich), dipropylamine (DPA, Aldrich) and methylene blue (MB, Aldrich). A reaction gel with composition (in oxides) $Al_2O_3:P_2O_5:0.3SiO_2:TEAOH:1.6DPA:77H_2O:0.075MB$ was prepared in the following way: 8.170 g of aluminium isopropoxide, 4.612 g of 85% phosphoric acid and 21.582 g of deionized water were stirred in a closed polytetrafluoroethylene bottle until a homogeneous solution was obtained; 0.901 g of Ludox AS-40 were added and the mixture was stirred for 3 hours; then 8.415 g of TEAOH 35% and 3.238 g of DPA were added, and the mixture was vigorously stirred at 50°C for three days. Then 0.561 g of methylene blue were added, by stirring for 30 more minutes, and the mixture was transferred into two 45 ml Teflon lined stainless steel autoclaves. The latter were introduced into an air oven and heated at 125°C for 15 hours, and then at 200°C for 15 hours. After cooling, the content of the autoclave was purified repeatedly by centrifuging and dispersion in deionized water, and finally the solid was dried at 80°C in an air oven overnight. The powder X-ray diffraction spectrum indicated the presence of the sole zeolitic topology CHA, which identified SAPO-34. The X-ray photoelectron spectroscopy confirmed the presence of phosphorus, aluminum and silicon.

The crystals, of platy shape, had two equal dimensions with size in the range between 1 and 2 $\mu$m, with average size 1.5 $\mu$m, whereas the size of the third dimension was in the range between 120 and 210 nm. The aspect ratio of the crystals was about 9.

In order to remove the tetraethylammonium ion without nanocrystal sintering and aggregation, a polymer network was formed into a colloidal SAPO-34 suspension in the following way: in a suspension of 1.0 g SAPO-34 in 50 ml of deionized water, 5.0 g of acrylamide (Alfa Aesar), 1.0 mg of N,N'-methylenebisacrylamide (Aldrich), and 0.13 g of ammonium peroxidisulfate $(NH_4)_2S_2O_8$ (Alfa-Aesar) were dissolved. The suspension was ultrasonicated for 1 hour to disperse the SAPO-34 crystals in the mixture, and then heated at 60°C to form an elastic gel. The gel was dried at 80-120°C for two days to yield a glassy polymeric mass which, in turn, was carbonized first at 500 °C in a nitrogen atmosphere (heating rate 2°C/min), and then at 500°C in air (heating rate 2°C/min).

The measured specific outer surface of the non calcined SAPO-34 crystals ($N_2$ sorption at 77 K, BET method) was 7.3 $m^2$/g, equivalent to 8.9 $m^2$/g for the calcined SAPO-34. The stoichiometric amount of the trifunctional modifying agent $F(CF_2)_8CH_2CH_2SiCl_3$ to be used was therefore determined to be $2.2 \cdot 10^{-5}$ moles/g. 0.628 g of calcined SAPO-34 were suspended in 20 ml of dry toluene by ultrasonication for 15 min in a dry atmosphere. 50 $\mu$l of $F(CF_2)_8CH_2CH_2SiCl_3$ ($1.4 \cdot 10^{-4}$ moles, Apollo Scientific) were added and the mixture was stirred for 15 minutes. The solution was eliminated, the solid was washed repeatedly with dry toluene to remove the excess of reagent, and the solid was dried at 180°C under vacuum. A suspension containing 2.11 wt% of the dried solid, 4.91 wt% of Hyflon AD60X and 92.98 wt% of FC72 (3M) was magnetically stirred until a viscous homogeneous suspension formed. The polymer-to-SAPO-34 volumetric ratio was 65:35. The suspension was poured in a stainless steel ring onto a leveled glass surface, and the ring was covered with a watch glass to slow down the evaporation rate. After three days a white opaque film was detached from the glass, and any residual solvent was removed by heating under vacuum up to 130 °C, heating rate 2°C/hour.

The thickness of the membrane was measured with a micrometer (Carl Mahr) and resulted to be 27 $\mu$m. The pure gas permeability of the membrane was measured as described in example 1. The permeability of the gases tested are reported in Table 1 and in Figure 1.

Comparative Example n. 6.

97.6 mg of Teflon AF1600 were stirred in 1.528 g of Galden HT110 (Solvay Solexis) until a viscous homogeneous solution formed. The solution was poured in a stainless steel ring onto a leveled glass surface, and the ring was covered with a watch glass to slow down the evaporation rate of the solvent. After three days a clear transparent film was detached from the glass, and any residual solvent was removed by heating under vacuum up to 160 °C, heating rate 2°C/hour.

The thickness of the membrane was measured with a micrometer (Carl Mahr) and resulted to be 32 $\mu$m. The pure gas permeability of the membrane was measured as described in example 1. The permeability of the gases tested are reported in Table 1 and in Figure 1.

Table 1. Pure gas permeability (Barrer) and ideal $CO_2/CH_4$ selectivity ($\alpha$) of Hyflon AD60X, Teflon AF1600 and mixed matrix membranes thereof containing 35 v% of SAPO-34 fillers of different average size and Aspect Ratio (AR).

| Polymer | Hyflon AD60X | | | | Teflon AF1600 | |
|---|---|---|---|---|---|---|
| Filler size ($\mu$m)/AR | - | 0.2/2 | 2/2 | 1.5/9 | - | 2/2 |
| P(He) | 293 | 390 | 260 | 163 | 590 | 950 |
| P(H2) | 111 | 212 | 96 | 39 | 260 | 629 |
| P($CO_2$) | 60 | 155 | 102 | 46 | 207 | 1188 |
| P($O_2$) | 29 | 40 | 26 | 13 | 90 | 201 |
| P($N_2$) | 8.2 | 13 | 7.5 | 4.5 | 36 | 74.5 |
| P($CH_4$) | 2.7 | 4.1 | 3.2 | 1.2 | 24 | 60.2 |
| $\alpha$ ($CO_2/CH_4$) | 22 | 38 | 32 | 40 | 5.8 | 20 |

Figure 1 shows permeability/selectivity diagram for the $CO_2/CH_4$ couple for the membranes of examples 1-6. The continuous line represents the upper bound of the separative capability of polymeric membranes, and it is used to compare the effectiveness of a membrane material for the separation of $CO_2$ from methane [L. M. Robeson, J. Membrane Sci., 320 (2008) 390].

Figure 2 shows SEM pictures of the cross section of the mixed matrix membrane prepared with Teflon AF1600 and 35 v% SAPO-34, 2 $\mu$m long and aspect ratio 2.

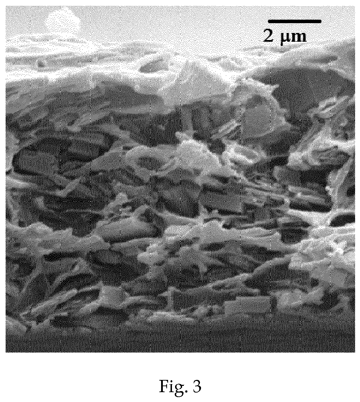

Figure 3 shows SEM picture of the cross section of the mixed matrix membrane prepared with Hyflon AD60X and 35 v% SAPO-34, 1.5 $\mu$m long and aspect ratio 9.

**Claims**

1. Method for the preparation of mixed matrix membranes for the separation of fluids containing a hydrophobic perfluorinated or highly fluorinated polymer, and microporous fillers containing in origin -OH groups on their outer surface, comprising the steps of:

   a) surface modification of the microporous filler with fluorophilic modification agents of formula $X_2SiR_fR$ or $X_3SiR_f$, where the nature of the substituent X is such that it can be exchanged to form covalent bonds between the silicon of the modifying agent and the oxygen of the -OH groups which are present on the surface of the particles to be dispersed in the matrix, $R_f$ is a hydrophobic fluorinated radical, and R is-$R_f$, a different hydrophobic fluorinated radical, or any radical containing only C and H atoms; the modification reaction is carried out by employing the stoichiometric amount of reagent needed to react with all of the -OH groups on the outer surface of the porous fillers, or a multiple of this amount which is obtained by multiplying the stoichiometric amount of reagent for a factor in the range between 1 and 20.
   b) preparation of a homogeneous suspension of the modified porous filler in a solution in which: the solute is i) a hydrophobic perfluorinated polymer, or ii) a hydrophobic highly fluorinated polymer chosen from the group of homo- and co-polymers of tetrafluoroethylene, trifluoroethylene, chlorotrifluoroethylene, hexafluoropropylene, perfluorodioxoles, pefluoroalkenylvinylethers, pefluoroalkoxylvinylethers, or iii) a mixture of two or more hydrophobic perfluorinated polymers and/or highly fluorinated polymers chosen from the group of homo- and co-polymers of tetrafluoroethylene, trifluoroethylene, chlorotrifluoroethylene, hexafluoropropylene, perfluorodioxoles, pefluoroalkenylvinylethers, pefluoroalkoxylvinylethers; and the solvent is a fluorinated solvent or a mixture of solvents containing at least one fluorinated solvent;
   c) shaping of the suspension in the desired conformation of the membrane;
   d) removal of the solvent from the shaped suspension.

2. Method according to claim 1, in which the substituent X in the modifying agent is chosen from a halogen or a hydrogen atom; an -OR' group, in which R' is an alkyl group containing from 1 to 8 C atoms; an esteric group R'C(O)O-, in which R' is a hydrocarbon group containing from 1 to 8 C atoms; -NR'R" groups, in which R' and R" are each independently a hydrocarbon group containing from 1 to 8 C atoms, or a -Si($R_fR_2$) group;-OSO$_2$R groups in which R is -CF$_3$ or p-C$_6$H$_4$-CH$_3$.

3. Hydrophobic fluorinated mixed matrix membranes for the separation of fluids obtained according to the methods of claims 1 or 2 comprising a) a hydrophobic perfluorinated polymer, or ii) a hydrophobic highly fluorinated polymer chosen from the group of homo-and co-polymers of tetrafluoroethylene, trifluoroethylene, chlorotrifluoroethylene, hexafluoropropylene, perfluorodioxoles, pefluoroalkenylvinylethers, pefluoroalkoxylvinylethers, or iii) a mixture of two or more hydrophobic perfluorinated polymers and/or highly fluorinated polymers chosen from the group of homo- and copolymers of tetrafluoroethylene, trifluoroethylene, chlorotrifluoroethylene, hexafluoropropylene, perfluorodioxoles, pefluoroalkenylvinylethers, pefluoroalkoxylvinylethers; and b) a microporous filler containing in origin -OH groups on their outer surface modified with the fluorophilic modification agent X$_2$SiR$_f$R or X$_3$SiR$_f$, where the nature of the substituent X is such that it can be exchanged to form covalent bonds between the silicon of the modifying agent and the oxygen of the -OH groups which are present on the surface of the particles to be dispersed in the matrix, R$_f$ is a hydrophobic fluorinated radical, and R is R$_f$, a different hydrophobic fluorinated radical, or any radical containing only C and H atoms.

4. The hydrophobic fluorinated mixed matrix membranes according to claim 3, **characterized by** the fact that the microporous filler is a silica zeolite, a silicoaluminate zeolite, an aluminophosphate molecular sieve, a silicoaluminophosphate molecular sieve, a microporous inorganic oxide, a molecular sieve carbon (CMS), or mixtures thereof.

5. The hydrophobic fluorinated mixed matrix membranes according to claims 3 or 4, **characterized by** the fact that the microporous filler is a molecular sieve of CHA topology.

6. The hydrophobic fluorinated mixed matrix membranes according to claims 3, 4 or 5, **characterized by** the fact that the microporous filler is a catalyst.

7. The hydrophobic fluorinated mixed matrix membranes according to claims 3, 4, 5 or 6, **characterized by** the fact that the polymeric matrix contains homo- and co-polymers of perfluoro-3-butenylvinylether, perfluoroallylvinylether, perfluoro-4-methoxy-1,3-dioxole or perfluoro-2,2-dimethyl-1,3-dioxole.

8. The hydrophobic fluorinated mixed matrix membranes according to claims 3, 4, 5, 6 or 7, **characterized by** the fact that said membranes are self-supported or supported on a porous support.

9. The hydrophobic fluorinated mixed matrix membranes according to claims 3, 4, 5, 6, 7 or 8, **characterized by** the fact that said membranes are in flat, in tubular or in capillary configuration.

10. A process for the separation of at least one fluid component from a fluid mixture containing said fluid component, **characterized by** the fact that said process comprises:

A. a hydrophobic fluorinated mixed matrix membrane for the separation of fluids according to claims 3-9 which is permeable to said fluid component;
B. contacting the fluid mixture on one side of said membrane to cause the said components to selectively permeate the membrane, and;
C. removing from the opposite side of said membrane a permeate composition enriched in concentration of at least one component of the mixture.

11. The process according to claim 10 **characterized by** the fact that the fluid mixture is a gaseous mixture.

12. The process according to claim 10 or 11 **characterized by** the fact that the gaseous component to separate from the gaseous mixture has a kinetic diameter of about 2-6 Å (0,2-0,6 nm).

13. The process according to claim 10 **characterized by** the fact that the fluid mixture is a liquid mixture.

**Patentansprüche**

1. Verfahren zur Herstellung von Mixed-Matrix-Membranen, die ein hydrophobes perfluoriertes oder stark fluoriertes Polymer und mikroporösen Füllstoffen, die auf ihrer Außenfläche -OH-Gruppen ursprünglich enthalten, enthalten, zur Trennung von Fluida, umfassend die folgenden Schritte:

   a) Oberflächenmodifizierung des mikroporösen Füllstoffs mit fluorophilen Modifizierungsmitteln der Formel $X_2SiR_fR$ oder $X_3SiR_f$, wobei die Art des Substituents X so ist, dass er ausgetauscht werden kann, um kovalente Bindungen zwischen dem Silizium des Modifizierungsmittels und dem Sauerstoff der -OH-Gruppen, die auf der Oberfläche der innerhalb der Matrix zu dispergierenden Teilchen vorhanden sind, zu binden, Rf ist ein hydrophobes fluoriertes Radikal, und R ist Rf, ein unterschiedliches hydrophobes fluoriertes Radikal oder jedes Radikal, das nur C- und H-Atome enthält; die Modifizierungsreaktion wird durchgeführt, indem die stöchiometrische Menge an Reagenz, die erforderlich ist, um mit allen -OH-Gruppen auf der Außenfläche der porösen Füllstoffe, oder ein Vielfaches dieser Menge, das durch Multiplikation der stöchiometrischen Menge an Reagenz mit einem Faktor im Bereich zwischen 1 und 20, zu reagieren, verwendet wird.
   b) Herstellung einer homogenen Suspension des modifizierten porösen Füllstoffs in einer Lösung, in der: der gelöste Stoff ist i) ein hydrophobes perfluoriertes Polymer, oder ii) ein hydrophobes hochfluoriertes Polymer, ausgewählt aus der Gruppe von Homo- und Co-Polymeren von Tetrafluorethylen, Trifluorethylen, Chlortrifluorethylen, Hexafluorpropylen, Perfluordioxolen, Pefluoralkenylvinylethern, Pefluoralkoxylvinylethern, oder iii) eine Mischung aus zwei oder mehr hydrophoben perfluorierten Polymeren und/oder hochfluorierten Polymeren, ausgewählt aus der Gruppe von Homo- und Co-Polymeren von Tetrafluorethylen, Trifluorethylen, Chlortrifluorethylen, Hexafluorpropylen, Perfluordioxolen, Pefluoroalkenylvinylethern, Pefluoralkenylvinylethern; und das Lösungsmittel ist ein fluoriertes Lösungsmittel oder eine Mischung von Lösungsmitteln, die mindestens ein fluoriertes Lösungsmittel enthält;
   c) Formen der Suspension in der gewünschten Konformation der Membran;
   d) Entfernen des Lösungsmittels aus der geformten Suspension.

2. Verfahren nach Anspruch 1, bei dem der Substituent X im Modifizierungsmittel aus einem Halogen- oder einem Wasserstoff-Atom ausgewählt ist; eine -OR'-Gruppe, in der R' eine Alkylgruppe mit 1 bis 8 C-Atomen ist; eine Estergruppe R'C(0)0-, in der R' eine Kohlenwasserstoffgruppe mit 1 bis 8 C-Atomen ist; -NR'R"-Gruppen, in denen R' und R" jeweils unabhängig voneinander eine Kohlenwasserstoffgruppe mit 1 bis 8 C-Atomen, oder eine -Si($R_fR_2$)-Gruppe sind; -OSO$_2$R-Gruppen, in denen R -CF$_3$ oder p-C$_6$H$_4$-CH$_3$ sind.

3. Hydrophobe fluorierte Mixed-Matrix-Membranen zur Trennung von Fluida, erhalten nach den Verfahren nach Anspruch 1 oder 2, umfassend a) ein hydrophobes perfluoriertes Polymer oder ii) ein hydrophobes hochfluoriertes Polymer ausgewählt aus der Gruppe von Homo- und Co-Polymeren von Tetrafluorethylen, Trifluorethylen, Chlortrifluorethylen, Hexafluorpropylen, Perfluordioxolen, Pefluoralkenylvinylethern, Pefluoralkoxylvinylethern, oder iii) eine Mischung aus zwei oder mehr hydrophoben perfluorierten Polymeren und/oder hochfluorierten Polymeren, ausgewählt aus der Gruppe von Homo- und Co-Polymeren von Tetrafluorethylen, Trifluorethylen, Chlortrifluorethylen, Hexafluorpropylen, Perfluordioxolen, Pefluoroalkenylvinylethern, Pefluoralkenylvinylethern; und b) einen mikroporösen Füllstoff, der an seiner äußeren Oberfläche -OH-Gruppen ursprünglich enthält, und der mit dem fluorophilen Modifizierungsmittel $X_2SiR_fR$ oder $X_3SiR_f$ modifiziert ist, wobei die Art des Substituents X so ist, dass er ausgetauscht werden kann, um kovalente Bindungen zwischen dem Silizium des Modifizierungsmittels und dem Sauerstoff der -OH-Gruppen, die auf der Oberfläche der innerhalb der Matrix zu dispergierenden Teilchen vorhanden sind, zu binden, Rf ist ein hydrophobes fluoriertes Radikal, und R ist Rf, ein unterschiedliches hydrophobes fluoriertes Radikal oder jedes Radikal, das nur C- und H-Atome enthält.

4. Hydrophobe fluorierte Mixed-Matrix-Membranen nach Anspruch 3 **dadurch gekennzeichnet, dass** der mikroporöse Füllstoff ein Siliciumdioxidzeolith, ein Silicoaluminatzeolith, ein Aluminiumphosphatmolekularsieb, ein Silicoaluminophosphatmolekularsieb, ein mikroporöses anorganisches Oxid, ein Molekularsiebkohlenstoff (CMS), oder eine Mischung davon ist.

5. Hydrophobe fluorierte Mixed-Matrix-Membranen nach Anspruch 3 oder 4, **dadurch gekennzeichnet, dass** der mikroporöse Füllstoff ein Molekularsieb mit CHA-Topologie ist.

6. Hydrophobe fluorierte Mixed-Matrix-Membranen nach Anspruch 3, 4 oder 5, **dadurch gekennzeichnet, dass** der mikroporöse Füllstoff ein Katalysator ist.

7.  Hydrophobe fluorierte Mixed-Matrix-Membranen nach Anspruch 3, 4, 5 oder 6, **dadurch gekennzeichnet, dass** die Polymermatrix Homo- und Co-Polymere von Perfluor-3-Butenylvinylether, Perfluorallylvinylether, Perfluor-4-Methoxy-1,3-Dioxol oder Perfluor-2,2-dimethyl-1,3-Dioxol enthält.

8.  Hydrophobe fluorierte Mixed-Matrix-Membranen nach Anspruch 3, 4, 5, 6 oder 7, **dadurch gekennzeichnet, dass** die Membranen selbsttragend oder auf einem porösen Träger gelagert sind.

9.  Hydrophobe fluorierte Mixed-Matrix-Membranen nach Anspruch 3, 4, 5, 6, 7 oder 8, **dadurch gekennzeichnet, dass** die Membranen flach, röhrenförmig oder kapillar konfiguriert sind.

10. Verfahren zur Trennung von mindestens einer Fluidkomponente von einer Fluidmischung, die die Fluidkomponente enthält, geke **dadurch gekennzeichnet, dass** das Verfahren umfasst:

    A. eine hydrophobe fluorierte Mischmatrixmembran, die für die Fluidkomponente durchlässig ist, zur Trennung von Fluida nach Anspruch 3-9;
    B. Inkontaktbringen der Fluidmischung auf einer Seite der Membran, um zu bewirken, dass die Komponenten die Membran selektiv durchdringen, und;
    C. Entfernen einer Permeatzusammensetzung, die an der Konzentration von mindestens einer Komponente der Mischung angereichert ist, von der gegenüberliegenden Seite der Membran.

11. Verfahren nach Anspruch 10, **dadurch gekennzeichnet, dass** die Fluidmischung eine gasförmige Mischung ist.

12. Verfahren nach Anspruch 10 oder 11, **dadurch gekennzeichnet, dass** die von der Gasmischung abzutrennende gasförmige Komponente einen kinetischen Durchmesser von circa 2 bis 6 Å (0,2 bis 0,6 nm) aufweist.

13. Verfahren nach Anspruch 10, **dadurch gekennzeichnet, dass** die Fluidmischung eine Flüssigkeitsmischung ist.

**Revendications**

1.  Procédé pour la préparation de membranes à matrice mixte pour la séparation de fluides contenant un polymère hydrophobe perfluoré ou un polymère hautement fluoré, et des charges microporeuses contenant à l'origine des groupes -OH sur leur surface externe, comprenant les étapes consistant à:

    a) modification de surface de la charge microporeuse avec des agents de modification fluorophiles de formule $X_2SiR_fR$ ou $X_3SiR_f$, où la nature du substituant X est telle qu'il peut être échangé pour former des liaisons covalentes entre le silicium de l'agent modificateur et l'oxygène des groupes -OH présents à la surface des particules à disperser dans la matrice, $R_f$ est un radical fluoré hydrophobe, et R est $R_f$, un radical fluoré hydrophobe différent, ou tout radical ne contenant que des atomes de C et de H; la réaction de modification est effectuée en employant la quantité stœchiométrique de réactif nécessaire pour réagir avec tous les groupes -OH sur la surface extérieure des charges poreuses, ou un multiple de cette quantité qui est obtenu en multipliant la quantité stœchiométrique de réactif pour une facteur compris entre 1 et 20.
    b) préparation d'une suspension homogène de la charge poreuse modifiée dans une solution dans laquelle: le soluté est i) un polymère perfluoré hydrophobe, ou ii) un polymère hydrophobe hautement fluoré choisi dans le groupe des homopolymères et copolymères du tétrafluoroéthylène, trifluoroéthylène, chlorotrifluoroéthylène, hexafluoropropylène, perfluorodioxoles, pefluoroalkénylvinyléthers, pefluoroalkoxylvinyléthers, ou iii) un mélange de deux ou plusieurs polymères perfluorés hydrophobes et/ou polymères hautement fluorés choisis dans le groupe des homopolymères et copolymères du tétrafluoroéthylène, trifluoroéthylène, chlorotrifluoroéthylène, hexafluoropropylène, perfluorodioxoles, pefluoroalkénylvinyléthers, pefluoroalkoxylvinyléthers; et le solvant est un solvant fluoré ou un mélange de solvants contenant au moins un solvant fluoré;
    c) mise en forme de la suspension dans la conformation souhaitée de la membrane;
    d) élimination du solvant de la suspension façonnée.

2.  Procédé selon la revendication 1, dans lequel le substituant X dans l'agent modificateur est choisi parmi un halogène ou un atome d'hydrogène; un groupe -OR', dans lequel R' est un groupe alkyle contenant de 1 à 8 atomes de C; un groupe estérique R'C(O)O-, dans lequel R' est un groupe hydrocarboné contenant de 1 à 8 atomes de C; des groupes -NR'R", dans lesquels R' et R" sont chacun indépendamment un groupe hydrocarboné contenant de 1 à 8 atomes de C, ou un groupe -Si($R_fR_2$); des groupes -$OSO_2R$ dans lesquels R est -$CF_3$ ou p-$C_6H_4$-$CH_3$.

3. Membranes à matrice mixte fluorée hydrophobe pour la séparation des fluides obtenues selon les procédés des revendications 1 ou 2 comprenant a) un polymère perfluoré hydrophobe, ou ii) un polymère hydrophobe hautement fluoré choisi dans le groupe des homopolymères et copolymères de tétrafluoroéthylène, trifluoroéthylène, chloro-trifluoroéthylène, hexafluoropropylène, perfluorodioxoles, pefluoroalkénylvinyléthers, perfluoroalkoxylvinyléthers, ou iii) un mélange de deux ou plusieurs polymères perfluorés hydrophobes et/ou des polymères hautement fluorés choisis dans le groupe des homopolymères et copolymères de tétrafluoroéthylène, trifluoroéthylène, chlorotrifluo-roéthylène, hexafluoropropylène, perfluorodioxoles, pefluoroalkénylvinyléthers, perfluoroalkoxylvinyléthers; et b) une charge microporeuse contenant à l'origine des groupes -OH sur sa surface extérieure modifiée avec l'agent de modification fluorophile $X_2SiR_fR$ ou $X_3SiR_f$, où la nature du substituant X est telle qu'il peut être échangé pour former des liaisons covalentes entre le silicium de l'agent de modification et l'oxygène des groupes -OH qui sont présents à la surface des particules à disperser dans la matrice, $R_f$ est un radical fluoré hydrophobe, et R est $R_f$, un radical fluoré hydrophobe différent, ou tout radical ne contenant que des atomes de C et de H.

4. Membranes à matrice mixte fluorée hydrophobe selon la revendication 3, **caractérisées par le fait que** la charge microporeuse est une zéolithe de silice, une zéolithe silicoaluminate, un tamis moléculaire aluminophosphate, un tamis moléculaire silicoaluminophosphate, un oxyde inorganique microporeux, un tamis moléculaire de carbone (CMS), ou leurs mélanges.

5. Membranes à matrice mixte fluorée hydrophobe selon les revendications 3 ou 4, **caractérisées par le fait que** la charge microporeuse est un tamis moléculaire de topologie CHA.

6. Membranes à matrice mixte fluorée hydrophobe selon les revendications 3, 4 ou 5, **caractérisées par le fait que** la charge microporeuse est un catalyseur.

7. Membranes à matrice mixte fluorée hydrophobe selon les revendications 3, 4, 5 ou 6, **caractérisées par le fait que** la matrice polymérique contient des homopolymères et des copolymères de perfluoro-3-buténylvinyléther, perfluoroallylvinyléther, perfluoro-4-méthoxy-1,3-dioxole ou perfluoro-2,2-diméthyl-1,3-dioxole.

8. Membranes mixtes fluorées hydrophobes selon les revendications 3, 4, 5, 6 ou 7, **caractérisées par le fait que** lesdites membranes sont autoportantes ou supportées sur un support poreux.

9. Membranes à matrice mixte fluorée hydrophobe selon les revendications 3, 4, 5, 6, 7 ou 8, **caractérisées par le fait que** lesdites membranes sont en configuration plate, tubulaire ou capillaire.

10. Procédé de séparation d'au moins un component fluide d'un mélange fluide contenant ledit component fluide, **caractérisé par le fait que** ledit procédé comprend:

    A. une membrane à matrice mixte fluorée hydrophobe pour la séparation de fluides selon les revendications 3-9 qui est perméable audit component fluide;
    B. mettre en contacte le mélange fluide d'un seul côté de ladite membrane pour effectuer la perméation sélective desdits components au travers de la membrane, et;
    C. éliminer du côté opposé de ladite membrane une composition perméat enrichie en concentration d'au moins un component du mélange.

11. Procédé selon la revendication 10 **caractérisé par le fait que** le mélange fluide est un mélange gazeuse.

12. Procédé selon la revendication 10 ou 11, **caractérisé par le fait que** le component gazeuse à séparer du mélange gazeuse a un diamètre cinétique d'environ 2-6 Å (0,2-0,6 nm).

13. Procédé selon la revendication 10 **caractérisé par le fait que** le mélange fluide est un mélange liquide.

Fig. 1.

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090149313 A1, C. Liu
- US 6508860 B, S. S. Kulkarni
- US 7109140 B, E. Marand
- US 6508860 A, S. S. Kulkarni

**Non-patent literature cited in the description**

- **M. MULDER.** *Basic Principles of Membrane Technology,* 1991
- **J. C. CHARPENTIER.** Modern Chemical Engineering in the Framework of Globalization, Sustainability and Technical Innovation. *Ind. Eng. Chem. Res.,* 2007, vol. 46, 3465
- **T. S. CHUNG ; L. Y. JIANG ; Y. YI ; S. KULPRATHIPANJA.** *Prog. Polym. Sci.,* 2007, vol. 32, 483
- **R. M. BARRER ; S. D. JAMES.** *J. Phys. Chem.,* 1960, vol. 54 (1), 417
- **D. R. PAUL ; D. R. KEMP.** *J. Polym. Sci. Polym. Symp.,* 1973, vol. 41, 79-93
- **T. T. MOORE ; W. J. KOROS.** Non-ideal effects in organic-inorganic materials for gas separation membranes. *Journal of Molecular Structure,* 2005, vol. 739 (1-3), 87-98
- **X. ZHAN et al.** *Chinese J. Polym. Sci.,* 2010, vol. 28 (4), 625-35
- **R. K. ILER.** The Chemistry of Silica: Solubility, Polymerization, Colloid and Surface Properties and Biochemistry. Wiley, 1979
- **F. A. COTTON ; G. WILKINSON.** Advanced Inorganic Chemistry. Wiley, 1980, 387
- **C. M. DEKEYSER ; C. C. BURON ; S. R. DERCLAYE ; A. M. JONAS ; J. MARCHAND-BRYNAERT ; P. G. ROUXHET.** J. Coll. Interf. Sci. 2012, vol. 378, 77-82
- **S. R. COHEN ; R. NAAMAN ; J. SAGIV.** *J. Phys. Chem.,* 1986, vol. 90, 3054
- **M. CALISTRI YEH ; E. J. KRAMER ; R. SHARMA ; W. ZHAO ; M. H. RAFAILOVICH ; J. SOKOLOV ; J. D. BROCK.** *Langmuir,* 1996, vol. 12, 2747
- **U. SRINIVASAN ; M. R. HOUSTON ; R. T. HOWE ; R. MABOUDIAN.** *J. Microelectromech. Syst.,* 1998, vol. 7, 252
- **R. W. WANG ; G. BARAN ; S. L. WUNDER.** *Langmuir,* 2000, vol. 16, 6298
- **R. W. WANG ; S. L. WUNDER.** *J. Phys. Chem. B,* 2001, vol. 105, 173
- **D. DEVAPRAKASAM ; S. SAMPATH ; S. K. BISWAS.** *Langmuir,* 2004, vol. 20, 1329
- **G CLARIZIA et al.** *Micropor. Mesopor. Mater.,* 2008, vol. 115, 67-74
- **J. B. BRZOSKA et al.** *Langmuir,* 1994, vol. 10, 4367
- **R. BANGA et al.** *Langmuir,* 1995, vol. 11, 4393
- **K. WU et al.** *Langmuir,* 2005, vol. 21, 11795
- **E.L. CUSSLER.** Membranes containing selective flakes. *J. Membr. Sci.,* 1990, vol. 52, 275-288
- **S. R. VENNA ; M. A. CARREON.** *J. Phys. Chem. B,* 2008, vol. 112, 16261-16265
- **G. GOLEMME et al.** *Desalination,* 2006, vol. 200, 440
- Glassy perfluorolymer - zeolite hybrid membranes for gas separations. **G. GOLEMME et al.** Membrane gas separation. Wiley, 2010
- **R. W. BAKER ; K. LOKHANDWALA.** *Ind. Eng. Chem. Res.,* 2008, vol. 47, 2109
- **E. M. FLANIGEN ; J. M. BENNETT ; R. W. GROSE ; J. P. COHEN ; R. L. PATTON ; R. M. KIRCHNER ; J. V. SMITH.** *Nature,* 1978, vol. 271, 512-516
- **M. L. MACCHIONE et al.** *Polymer,* 2007, vol. 48, 2619
- **M. G. BUONOMENNA et al.** *Adv. Funct. Mater.,* 2012, vol. 22 (8), 1759-1767
- **L. M. ROBESON.** *J. Membrane Sci.,* 2008, vol. 320, 390